# EUROPEAN PATENT APPLICATION

(11) **EP 3 493 098 A1**
(43) Date of publication of application: **05.06.2019**
(21) Application number: 18158299.0
(22) Date of filing: 23.02.2018
(51) Int. Cl.: G06K 7/00, G06F 13/00, H01R 35/00

(54) **RFID READER WITH TURNABLE USB CONNECTOR**

(30) Priority: 30.11.2017 EP 17204671
(71) Applicant: ELATEC GmbH, 82178 Puchheim (DE)
(72) Inventor: HAERTEL, Stefan, 82178 Puchheim (DE); ZELENY, Matthias, 82256 Fürstenfeldbruck (DE)
(74) Representative: Lohr, Jöstingmeier & Partner

(57) **Abstract**

The invention relates to a RFID device with a housing, a RFID reader and an USB connector. The housing comprises a sensor section and a connector section wherein the connector section is distant from the sensor section. The RFID reader comprises an antenna and a RFID transmitter/receiver circuit connected to the antenna which is mounted in the sensor section of the housing. The USB connector is mechanically connected to the housing by a turnable attachment device and electrically connected to the RFID transmitter/receiver circuit by a flexible cable.

## Description

### Field of the invention

The invention relates to a secure retrofit RFID reader for printer solutions.

### Description of the related art

Data security becomes more and more important in commercial environments. In companies with central printer solutions limited access to sensible data content is not guaranteed. Unintended publication of sensible information as well as spying on corporate secrets by visitors or other employees capturing printed documents from the printer station may occur. Secure printing solutions with RFID readers for identifying a user at the printer station are known. Older printing systems do not have such an identifying system. Therefore, a retrofit solution for older printing systems without a RFID reader is needed.

JP5227917B2 discloses a handy type RFID (Radio Frequency IDentification) reader. The reader has a reader body with a USB cable connected thereto. The USB cable is for connecting the reader to a printing system without a RFID reader unit. The reader needs a storage area and the USB plug may be disconnected easily by an unauthorized person. Furthermore, the reader has no encryption device.

### Summary of the invention

The problem to be solved by the invention is to provide a simple and inexpensive solution for a retrofit RFID reader which may be attached to a printer. The solution has to be flexible as well as easily connectable to different printer systems. Furthermore, the device shall be small and visually appealing in its design. Solutions of the problem are described in the independent claims. The dependent claims relate to further improvements of the invention.

In a first embodiment, an RFID device comprises a housing, an RFID reader, and a USB connector. The USB connector may be mechanically connected to the housing at a connector section by a turnable attachment device. The housing preferably comprises a top part and a bottom part, both parts preferably comprising a plastic material. The top part preferably holds a sensor section which may support the RFID reader. The sensor section is part of the housing and the detection zone for an RFID transponder. The sensor section may be part of the lid, respectively of the top part of the housing and may contain an antenna within the lid. The antenna may also be aligned below the lid within the housing. The antenna may be attached to a circuit board for mechanically supporting the antenna.

The RFID reader comprises an RFID transmitter/receiver circuit connected to the at least one antenna. The transmitter/receiver circuit may be attached next to the antenna. The electrical connection of the RFID transmitter/receiver circuit to the USB connector may be established by a flexible cable and/or a plurality of flexible wires.

The bottom part preferably holds the USB connector at the connector section. The top part may have an additional LED device for displaying the status of the RFID reader. The USB connector may be a USB plug connector attached to the housing. Plug connector means a male USB plug.

A connector section may be attached to the housing distant from the sensor section. The connector section of the housing has an opening from an inner surface to an outer surface for the attachment device. The attachment device has a support, which may cover the opening at its outer surface. The opening may be stepped. Stepped means that the opening has a first diameter which corresponds to the thickness and the diameter of the support, but it is only a counterbore. The opening has also a second diameter which is smaller than the first diameter and extends from the inner surface to the outer surface. The support may be a circular disc. The support may have an opening for holding a USB plug. The attachment device further has at least two holding protrusions connected to the attachment device. The protrusions may protrude orthogonally from a surface of the attachment device. The attachment device may further have a catch for holding the USB plug in the opening of the attachment device. The opening of the connector section may have at least two notches at the sidewall of the opening. Sidewall means the surface orthogonal with respect to the outer surface, respectively the inner surface. The notches match to the holding protrusions for inserting the attachment device with the holding protrusions into the opening.

In an assembled state, the attachment device is inserted into the opening of the connector section. The attachment device may be rotated such that the inner surface of the housing bears the holding protrusions.

At least one stop is provided on the inner surface of the housing, respectively the bottom part, which preferably has a wedged shape for limiting the rotation of the attachment device. The stop may also have a concave or convex shape. The stop may interact with at least one holding protrusion, such that the attachment device may be rotated from a position where the holding protrusions are close to the notches, to at least one position where the holding protrusions are distant from the notches and blocked to rotate back afterwards. The USB connector may also be turnable within an angle of 160 degrees, preferably within an angle of 90 degrees. To limit the degree of rotation, another stop may be provided to the inner surface of the housing at the opening.

Preferably, the USB connector is a double-sided connector, which may be plugged into a USB socket in two positions rotated for 180°. In conjunction with a double-sided USB connector, the device may nearly be rotatable around 360° while the connector only rotates maximal about 90°, which prevents twisting of the cable.

A first pair of detents may be attached opposing each other around the opening. A second pair of detents may be attached opposing each other around the opening. The connecting line between the first pair of detents and the second pair of detents crosses in a right angle. Thus, the detents are shifted by 90 degrees. The holding protrusions may have indents corresponding to the detents for giving a haptic feedback when rotating the holding protrusion over the detents.

The housing may have an angle indicator which may be an arrow with two position indicators. The position indicators may correspond to one position indicator at the support. The arrow and the position indicators at the bottom part of the housing show the possible angle of rotation of the support. The housing may have an adhesive surface for mounting the RFID device to a surface of a printer system. The adhesive surface may comprise an adhesive tape. Alternatively, an assembly bracket may be used. It may be mounted at different locations of the housing.

The housing may have an additional USB socket which is connected to the RFID transmitter/receiver circuit. The USB socket may be attached flush-fitting with the surface of the top part of the housing. The USB socket may also be connected to the printer via the USB connector. The USB socket of the RFID device may be used for connecting a USB dongle to the RFID device for identifying a user or for connecting a standard USB device to the RFID device or to the printer via the RFID device to send documents to the printer. Basically, the USB socket may be a replacement for the USB socket of the printer used by the RFID device, such that other USB devices may still be connected to the printer.

The USB connector as well as the USB socket may be of type A, B, or C. The RFID device may have further USB sockets.

The attachment device may form a planar surface with the housing surface, respectively the outer surface of the bottom part. The USB connector may protrude orthogonally from the housing such that it may protrude orthogonally to a main plane of the at least one antenna from the housing. The alignment of the USB connector improves the receiving characteristics of the antenna.

The RFID device may have an adhesive tape at the same plane as the USB connector which protrudes from the housing for connecting the RFID device to another surface. That means that the adhesive tape may be aligned to the housing at the outer surface of the bottom side of the housing. The adhesive tape is for connecting the RFID device to a surface, for example of a printer station. Adhesive tape means a double-sided tape. A double-sided tape may be used which prevents the removal the RFID tag from the surface it is attached to. Thus, removal might only be done with a high degree of necessary force or by destroying the RFID device.

The RFID device may further comprise a secure access module (or secure application module) which is based on SmartCard Integrated Circuits and is used to enhance the security and cryptography performance in devices, commonly in devices needing to perform secure transactions, such as printer stations. It may be used for cryptographic computation and secure authentication against smart-cards or contactless EMV cards. Physically, an SAM card may either be a SIM card and plugged into a SAM slot in a reader attached to the RFID device, or a fixed integrated circuit in a housing directly soldered on a printed circuit board of the RFID device.

Basically, this RFID device may be used for any device or application which has an USB connector. Instead of the USB connector any other bus connector may be used.

Generally, such an RFID reader system may consist of a microcontroller and a reader IC to communicate over the RF interface with a contactless smartcard. The microcontroller takes the part of controlling the reader IC functions, such as protocol handling, command flow and data interpretation. By integrating a SAM into the reader system, the SAM handles all the key management and cryptography in a secure way. The entire system enables authentication and encryption of the contactless communication between the SAM and host system.

The housing of the RFID device may have a lockable cover within the sensor section. The lockable cover covers the SAM device. The SAM device may be attached to the housing within the area of the antenna, respectively within the sensing area. The antenna is attached on the upper surface of the top part of the housing. The antenna may also be attached below the upper part within the housing. The lockable cover may be covered by a security label. The security label prevents an unauthorized opening of the lockable cover. The security label may be irreparably damaged by an attempt to remove it.

### Brief description of the drawings

Fig. 1 shows a 3D view of an RFID device.
Fig. 2 shows a front view of an RFID device.
Fig. 3 shows a bottom view of an RFID device.
Fig. 4 shows a 3D view of an RFID device.
Fig. 5 shows a 3D view of an RFID device.
Fig. 6 shows the bottom part of the RFID device.
Fig. 7 shows the attachment device in a top view.
Fig. 8 shows the attachment device in a bottom view.
Fig. 9 shows the bottom part of the RFID device with the attachment device.

### Detailed description of the invention

In the following, preferred embodiments of the invention will be described with reference to the drawings. The same or similar elements or elements having the same effect may be indicated by the same reference number in multiple drawings. Repeating the description of such elements may be omitted in order to prevent redundant descriptions.

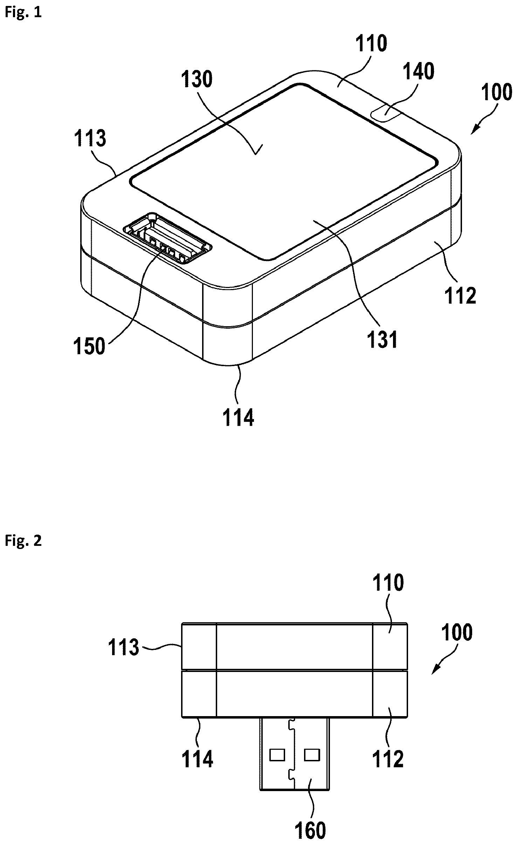

Fig. 1 shows a 3D view of a RFID device 100. The RFID device 100 comprises a housing 110 with a top part 113 and a bottom part 114 with an outer surface 112 forming the housing 100. The top part 113 has a sensor section 130 to communicate with an RFID transponder attached or held by a user next to the sensor section 130. It further has an LED device 140 for displaying the status of the RFID device 100. The top part 113 of the housing 110 also has an USB socket 150. The USB socket 150 is attached flush-fitting with the surface of the top part 113 of the housing 110. An antenna 131 may be attached to the sensor section 130.

Fig. 2 shows a front view of the RFID device 100. The housing 110 has a USB connector 160 formed as USB plug protruding orthogonally thereof respectively from the bottom part 114 of the housing 110. The USB connector 160 is for connecting the RFID device 100 to a USB socket. The USB connector 160 is attached to an attachment device 200. The attachment device 200 is attached to the housing 110. The attachment device 200 allows to rotate the USB connector 160 by 90 degrees within the housing 110. The top part 113 and a bottom part of the housing 110 as well as the USB connector 160 are apparent from the drawing. The bottom part 114 of the housing 110 has a USB connector 160 protruding orthogonally thereof. The USB connector 160 is for connecting the RFID device 100 to a USB socket. The USB connector 160 is attached to an attachment device 200. The attachment device 200 allows to rotate the USB connector 160 by 90 degrees.

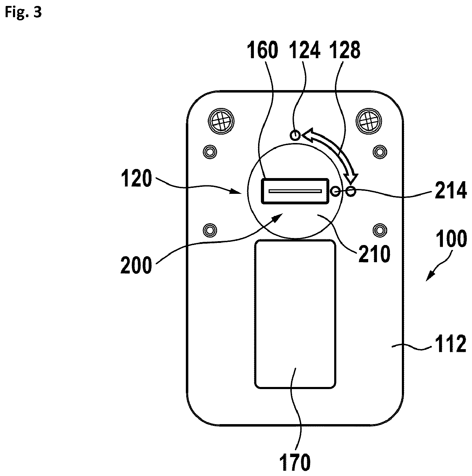

Fig. 3 shows a bottom view, respectively the bottom part 114 of an RFID device 100. The bottom part 114 has an outer surface 112. The USB connector 160 protrudes orthogonally from the bottom part 114 of the housing 110 of the RFID device 100. The attachment device 200 is aligned to the bottom part 114 of the housing 110. The attachment device 200 has a support 210 flushing with the outer surface 112 of the bottom part 114 of the housing 110. An arrow 128 with two position indicators 124 is attached to the housing 110. The position indicators 124 correspond with one position indicator 214 at the support 210. The arrow 128 and the position indicators 124 at the bottom part 114 of the housing 110 show the possible angle of rotation of the support 200. The housing 110 has an adhesive surface 170 for mounting the RFID device 100 to a surface of a printer system or any other electronic device.

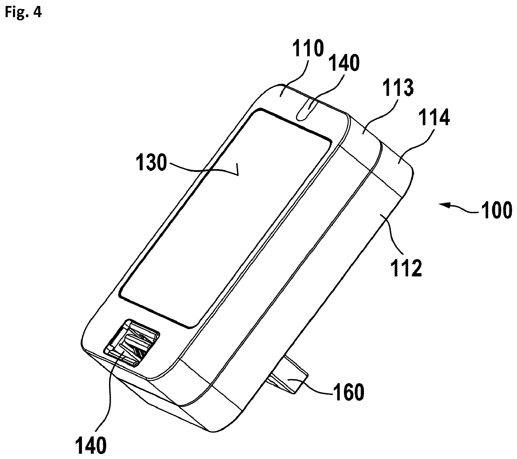

Fig. 4 shows another 3D view of the RFID device 100.

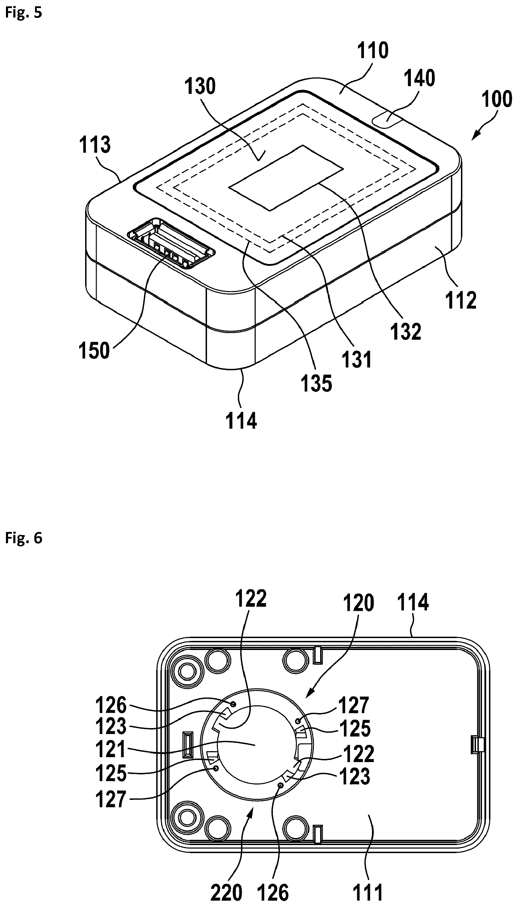

Fig. 5 shows a 3D view of the RFID device 100 according to Fig. 1. The RFID device has a lockable cover 132 within the sensor section 130. The lockable cover 132 covers a SAM device 133 (not shown). The SAM device 133 is attached to housing within an antenna 131. The antenna 131 is attached on the upper surface of the top part 113 of the housing 110, or attached below the upper part within the housing 110. The lockable cover 132 may be covered by a security label 135. The security label 135 prevents an unauthorized opening of the lockable cover 132.

Fig. 6 shows the bottom part 114 of the RFID device 100 in an open state from a top view. The opening 121 is graded in its height. The view shows the inner surface 111 of the bottom part 114. The bottom part 114 has a connector section 120. The connector section 120 comprises an opening 121 from the outer surface 112 to the inner surface 111 of the bottom part 114 for an attachment device 200. The opening has two additional notches 122. The opening has two stops 123 at the inner surface around the opening 121 next to the two notches 122. The stops 123 are wedge-shaped. Around the opening 121 there are two additional stops 125. A first pair of detents 126 is attached opposing each other around the opening 121. A second pair of detents 127 is attached opposing each other around the opening 112. The detents 126, 127 preferably are shifted by 90 degrees.

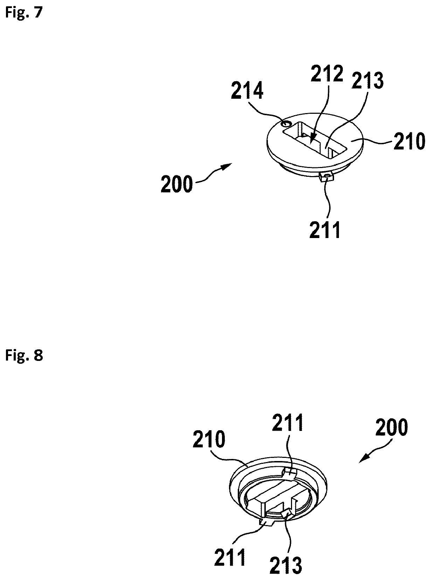

Fig. 7 shows an attachment device 200. The attachment device 200 has a support 210. The support 210 forms a ring corresponding to the graded opening 121. The attachment device 200 has two holding protrusions 211 protruding orthogonally from the attachment device 200. The holding protrusions 211 correspond to the notches 122. The attachment device has an opening 212 for holding the USB connector 160.

Fig. 8 shows an attachment device 200 according to Fig. 7 with a catch 213 for holding the USB connector 160.

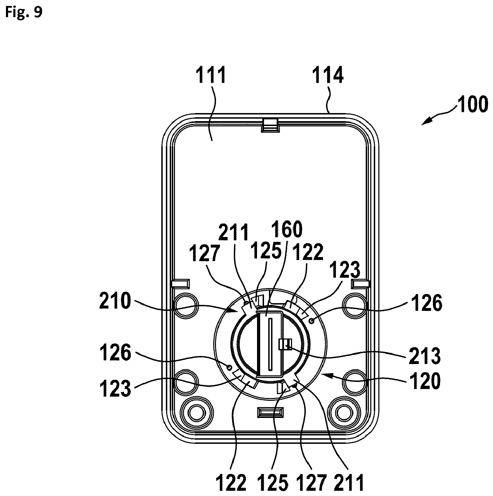

Fig. 9 shows an open housing 110 of the RFID device 100 with an attachment device 200 inserted in the opening 121. The attachment device 200 has been turned after inserting into the opening 121. Thus, the holding protrusion 211 glides over the wedge-shaped stop 123. The stop 125 limits the rotation of the attachment device 200.

Although the invention has been illustrated and described in detail by the embodiments explained above, it is not limited to these embodiments. Other variations may be derived by the skilled person without leaving the scope of the attached claims.

Generally, "a" or "an" may be understood as singular or plural, in particular with the meaning "at least one", "one or more", etc., unless this is explicitly excluded, for example by the term "exactly one", etc.

In addition, numerical values may include the exact value as well as a usual tolerance interval, unless this is explicitly excluded.

Features shown in the embodiments, in particular in different embodiments, may be combined or substituted without leaving the scope of the invention.

### List of reference numerals

- 100: RFID device
- 110: housing
- 111: inner surface
- 112: outer surface
- 113: top part
- 114: bottom part
- 120: connector section
- 121: opening
- 122: notch
- 123: stop
- 124: position indicator
- 125: stop
- 126: first pair of detents
- 127: second pair of detents
- 128: arrow
- 130: sensor section
- 131: antenna
- 132: lockable cover
- 133: SAM device
- 135: security label
- 140: LED device
- 150: USB socket
- 160: USB connector
- 170: adhesive surface/tape
- 200: attachment device
- 210: support
- 211: holding protrusion
- 212: opening
- 213: catch
- 214: position indicator

## Claims

1. RFID device (100) comprising a housing (110), an RFID reader, and a USB connector (160), wherein the housing further comprises a sensor section (130) and a connector section (120), the connector section (120) being distant from the sensor section (130),
the RFID reader comprising at least one antenna (131) and an RFID transmitter/receiver circuit connected to the at least one antenna (131) being mounted in the sensor section (130) of the housing (110), and
the USB connector (160) being mechanically connected to the housing (110) at the connector section (120) by a turnable attachment device (200) and electrically connected to the RFID transmitter/receiver circuit by a flexible cable and/or a plurality of flexible wires.

2. RFID device (100) according to claim 1,
**characterized in that**
the connector section (120) of the housing (110) has an opening (121) from an inner surface (111) to an outer surface (112) for the attachment device (200),
the attachment device (200) has a support (210) covering the outer surface (112) of the opening (121) and
the attachment device (200) further has at least two holding protrusions (211) connected to the support (210).

3. RFID device (100) according to claim 2,
**characterized in that**
the opening (121) has at least two notches (122) at a sidewall of the opening (121), the notches (122) matching to the holding protrusions (211) for inserting the attachment device (200) with the holding protrusions (211) into the opening (121).

4. RFID device (100) according to claim 2 or 3,
**characterized in that**
in an assembled state, when the attachment device (200) is inserted into the opening (121), the attachment device (200) may be rotated such that the inner surface (111) bears the holding protrusions (211).

5. RFID device (100) according to claim 2, 3 or 4,
**characterized in that**
at least one stop (123) is provided on the inner surface (111) which preferably has a wedged shape and which may interact with at least one holding protrusion (211), such that the attachment device (200) may be rotated from a position where the holding protrusions (211) are close to the notches (122) to at least one position where the holding protrusions (211) are distant from the notches (122) and blocked to rotate back afterwards.

6. RFID device (100) according to any of the previous claims,
**characterized in that**
the housing (110) has a USB socket (150) which is connected to the RFID transmitter/receiver circuit.

7. RFID device (100) according to any of the previous claims,
**characterized in that**
the USB connector (160) is a plug connector (160).

8. RFID device (100) according to any of the previous claims,
**characterized in, that**
the attachment device (200) forms a planar surface with the outer surface of the housing (110).

9. RFID device (100) according to any of the previous claims,
**characterized in that**
the USB connector (160) is a double-sided connector.

10. RFID device (100) according to any of the previous claims,
**characterized in that**
the USB connector (160) protrudes from the housing (110) orthogonally and/or protrudes orthogonally to a main plane of the at least one antenna (131).

11. RFID device (100) according to any of the previous claims,
**characterized in that**
the RFID device (100) further comprises a secure access module (SAM) (133) for enhancing the security and cryptography performance of the device.

12. RFID device (100) according to claim 11,
**characterized in that**
the SAM module (133) is comprised in a smartcard.

13. RFID device (100) according to claim 11 and 12,
**characterized in, that**
a lockable cover (132) in the sensor section (130) is provided above the SAM module (133).

14. RFID device (100) according to claim 13,
**characterized in that**
the lockable cover (132) in the sensor section (130) is covered by a security label (135) for preventing the opening of the lockable cover wherein
the security label (135) will be irreparably damaged by an attempt to remove it.

15. RFID device (100) according to any of the previous claims,
**characterized in that**
the RFID device (100) has an adhesive tape (170) at the same plane as the USB connector (160) protruding from the housing (110) for connecting the RFID device (100) to another surface.
